(19)

Europäisches
Patentamt
European
Patent Office
Office européen
des brevets

(11) **EP 2 355 370 A1**

(12) **EUROPEAN PATENT APPLICATION**

(43) Date of publication:
**10.08.2011 Bulletin 2011/32**

(51) Int Cl.:
***H04B 7/06*** (2006.01)    ***H04B 7/04*** (2006.01)

(21) Application number: **11000159.1**

(22) Date of filing: **11.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.01.2010 US 296633 P
12.07.2010 US 834411**

(71) Applicant: **Broadcom Corporation
Irvine, CA 92617 (US)**

(72) Inventors:
• **Ojard, Eric
San Francisco, CA 94123 (US)**
• **Ariyavisitakul, Sirikiat Lek
Alpharetta, GA 30022 (US)**

(74) Representative: **Jehle, Volker Armin
Bosch Jehle Patentanwaltsgesellschaft mbH
Flüggenstrasse 13
80639 München (DE)**

(54) **A method and system for orthogonalized beamforming in multiple user multiple input multiple output (mu-mimo) communications systems**

(57)    A method and system for orthogonalized beamforming in multiple user multiple input multiple output (MU-MIMO) communication systems are presented. Aspects of the method and system include an iterative method for computing a plurality of beamforming matrices in a MU-MIMO system. A transmitting station, such as an access point (AP) for example, may use computed channel estimates, and/or singular vector matrices, to compute orthogonal beamforming matrices. The computed orthogonal beamforming matrices may be used to generate a plurality of signals, which may be concurrently transmitted to the plurality of user devices.

**FIG. 1**

**Description**

CROSS-REFERENCE TO RELATED APPLICATIONS/INCORPORATION BY REFERENCE

This application makes reference to, claims priority to, and claims the benefit of United States Provisional Application Serial Number 61/296,633 filed January 20, 2010.

FIELD OF THE INVENTION

Certain embodiments of the invention relate to communication networks. More specifically, certain embodiments of the invention relate to a method and system for orthogonalized beamforming in multiple user multiple input multiple output (MU-MIMO) communication systems.

BACKGROUND OF THE INVENTION

Mobile communication has changed the way people communicate and mobile phones have been transformed from a luxury item to an essential part of every day life. The use of mobile phones is today dictated by social situations, rather than hampered by location or technology. While voice connections fulfill the basic need to communicate, and mobile voice connections continue to filter even further into the fabric of every day life, the mobile Internet is the next step in the mobile communication revolution. The mobile Internet is poised to become a common source of everyday information, and easy, versatile mobile access to this data will be taken for granted.
Single user MIMO (SU-MIMO) systems enable high speed wireless communications by concurrently transmitting multiple data streams using a plurality of NTX transmitting antennas at a transmitting station. The concurrently transmitted data streams may be received at a receiving station using a plurality of NRX receiving antennas. The Shannon capacity refers to a measure of the maximum data rate for communications between the transmitting station and the receiving station. In SU-MIMO systems, Shannon capacity may be achieved by closed-loop beamforming, link adaptation and/or successive interference cancellation (SIC) techniques.
In comparison to SU-MIMO systems, with MU-MIMO systems, a transmitting station may concurrently transmit multiple data streams, using a plurality of NTX transmitting antennas, which may be concurrently received by multiple receiving stations, where each of the receiving stations may utilize NRX receiving antennas. MU-MIMO systems may support the concurrent transmission of a larger number of data streams, using a larger number of transmitting antennas, relative to SU-MIMO systems.
Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and system for orthogonalized beamforming in multiple user multiple input multiple output (MU-MIMO) communication systems, substantially as shown in and/or described in connection with at least one of the figures, as set forth more completely in the claims.
According to an aspect, a method for processing signals is provided, the method comprising:

performing by one or more processors and/or circuits:

computing a plurality of beamforming matrices in a multiple user multiple input multiple output system based on a plurality of channel estimate matrices, channel correlation matrices and/or eigenvector matrices; computing a plurality of orthogonalizing matrices based on said plurality of beamforming matrices; and determining a plurality of orthogonal beamforming matrices based on said plurality of beamforming matrices and said plurality of orthogonalizing matrices.

Advantageously, the method further comprises generating a plurality of intermediate matrices based on said plurality of beamforming matrices.
Advantageously, the method further comprises selecting one of said plurality of intermediate matrices and a corresponding selected one of said plurality of beamforming matrices.
Advantageously, a matrix product of said selected one of said plurality of intermediate matrices and a Hermitian transformed version of said selected one of said plurality of intermediate matrices is equal to a matrix product of said corresponding selected one of said plurality of beamforming matrices and a Hermitian transformed version of said corresponding selected one of said plurality of beamforming matrices.

Advantageously, the method further comprises generating said selected one of said plurality of intermediate matrices based on Cholesky decomposition.

Advantageously, a selected one of said plurality of orthogonalizing matrices is equal to a matrix inverted version of said selected one of said plurality of intermediate matrices.

Advantageously, the method further comprises computing one of said plurality of orthogonal beamforming matrices based on said selected one of said plurality of orthogonalizing matrices and said corresponding selected one of said plurality of beamforming matrices.

Advantageously, the method further comprises computing a plurality of precoding matrices for said multiple user multiple input multiple output system.

Advantageously, each of said plurality of precoding matrices corresponds to at least one of a plurality of users in said multiple user multiple input multiple output system.

Advantageously, the method further comprises generating a plurality of orthogonal precoding beamforming matrices based on said plurality of precoding matrices and said plurality of orthogonal beamforming matrices.

According to an aspect, a system for processing signals comprises:

> one or more circuits that enable computation of a plurality of beamforming matrices in a multiple user multiple input multiple output system based on a plurality of channel estimate matrices, channel correlation matrices and/or eigenvector matrices;
> said one or more circuits enable computation of a plurality of orthogonalizing matrices based on said plurality of beamforming matrices; and
> said one or more circuits enable determination of a plurality of orthogonal beamforming matrices based on said plurality of beamforming matrices and said plurality of orthogonalizing matrices.

Advantageously, said one or more circuits enable generation of a plurality of intermediate matrices based on said plurality of beamforming matrices.

Advantageously, said one or more circuits enable selection of one of said plurality of intermediate matrices and a corresponding selected one of said plurality of beamforming matrices.

Advantageously, a matrix product of said selected one of said plurality of intermediate matrices and a Hermitian transformed version of said selected one of said plurality of intermediate matrices is equal to a matrix product of said corresponding selected one of said plurality of beamforming matrices and a Hermitian transformed version of said corresponding selected one of said plurality of beamforming matrices.

Advantageously, said one or more circuits enable generation of said selected one of said plurality of intermediate matrices based on Cholesky decomposition.

Advantageously, a selected one of said plurality of orthogonalizing matrices is equal to a matrix inverted version of said selected one of said plurality of intermediate matrices.

Advantageously, said one or more circuits enable computation of one of said plurality of orthogonal beamforming matrices based on said selected one of said plurality of orthogonalizing matrices and said corresponding selected one of said plurality of beamforming matrices.

Advantageously, said one or more circuits enable computation of a plurality of precoding matrices for said multiple user multiple input multiple output system.

Advantageously, each of said plurality of precoding matrices corresponds to at least one of a plurality of users in said multiple user multiple input multiple output system.

Advantageously, said one or more circuits enable generation of a plurality of orthogonal precoding beamforming matrices based on said plurality of precoding matrices and said plurality of orthogonal beamforming matrices.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1 is a block diagram of an exemplary MIMO transceiver, which may be utilized in connection with an embodiment of the invention.

FIG. 2 is a block diagram of an exemplary multiple user MIMO system, which may be utilized in connection with an embodiment of the invention.

FIG. 3 is a flowchart that illustrates exemplary steps for orthogonalized beamforming in MU-MIMO communication systems, in accordance with an embodiment of the invention.

FIG. 4 is a flowchart that illustrates exemplary steps for orthogonalized beamforming with precoding in MU-MIMO communication systems, in accordance with an embodiment of the invention.

DETAILED DESCRIPTION OF THE INVENTION

Certain embodiments of the invention may be found in a method and system for orthogonalized beamforming in multiple user multiple input multiple output (MU-MIMO) communication systems. Various embodiments of the invention may enable an increase in data rate capacity for communications in MU-MIMO systems by utilizing an iterative method for computing a plurality of beamforming matrices in a MU-MIMO system. In an exemplary embodiment of the invention, a transmitting station, such as an access point (AP), may utilize the beamforming matrices to generate concurrently transmitted signals, which may be concurrently transmitted to the plurality of user devices. Each of the computed beamforming matrices is orthogonal. For each computed orthogonal beamforming matrix, a single user channel capacity value may be computed for a corresponding user device. An aggregate channel capacity may be computed as a sum of the plurality of computed single user channel capacity values. The computed orthogonal beamforming matrices may also utilize precoding. The utilization of orthogonal beamforming matrices may enable an increase in the data rate capacity for the communication channel utilized for communications in the MU-MIMO communication system relative to alternative approaches.

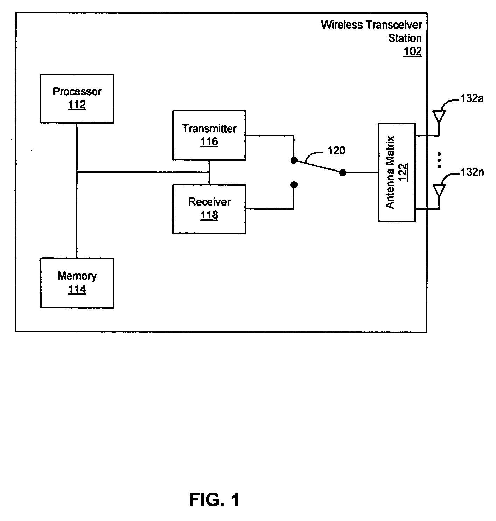

FIG. 1 is a block diagram of an exemplary MIMO transceiver, which may be utilized in connection with an embodiment of the invention. Referring to FIG. 1, there is shown a wireless transceiver station 102 and a plurality of antennas 132a...132n. The wireless transceiver station 102 is an exemplary wireless communication device, which may be utilized at an access point (AP) device or at a station (STA) device in a wireless communication system. The plurality of antennas 132a...132n may enable the wireless transceiver station 102 to transmit and/or receive signals, for example radio frequency (RF) signals, via a wireless communication medium. The wireless transceiver station 102 shown in FIG. 1 may also be depicted as comprising one or more transmitting antennas, which are coupled to the transmitter 116 and one or more receiving antennas, which may be coupled to the receiver 118 without loss of generality.

The exemplary wireless transceiver station comprises a processor 112, a memory 114, a transmitter 116, a receiver 118, a transmit and receive (T/R) switch 120 and an antenna matrix 122. The antenna matrix 122 may enable selection of one or more of the antennas 132a...132n for transmitting and/or receiving signals at the wireless transceiver station 102. The T/R switch 120 may enable the antenna matrix 122 to be communicatively coupled to the transmitter 116 or receiver 118. When the T/R switch 120 enables communicative coupling between the transmitter 116 and the antenna matrix 122, the selected antennas 132a...132n may be utilized for transmitting signals. When the T/R switch 120 enables communicative coupling between the receiver 118 and the antenna matrix 122, the selected antennas 132a...132n may be utilized for receiving signals.

The transmitter 116 may enable the generation of signals, which may be transmitted via the selected antennas 132a...132n. The transmitter 116 may generate signals by performing coding functions, signal modulation and/or signal modulation. In various embodiments of the invention, the transmitter 116 may enable generation of signals using precoding and/or beamforming techniques.

The receiver 118 may enable the processing of signals received via the selected antennas 132a...132n. The receiver 118 may generate data based on the received signals by performing signal amplification, signal demodulation and/or decoding functions. In various embodiments of the invention, the receiver 118 may enable generation of data, which may be utilized by the transmitter 116 for precoding and/or beamforming of generated signals.

The processor 112 may enable the generation of transmitted data and/or the processing of received data. The processor 112 may generate data, which is utilized by the transmitter 116 to generate signals. The processor 112 may process data generated by the receiver 118. In various embodiments of the invention in a node B, the processor 112 may process data received by the receiver 118 and generate coefficient data, which may be utilized by the transmitter 116 for precoding and/or beamforming of generated signals. The coefficient data may be stored in the memory 114.

In various embodiments of the invention, in an AP, the processor 112 may be operable to iteratively compute a plurality of beamforming matrices and/or corresponding matched filter matrices. The processor 112 within the AP may compute the beamforming matrices and/or matched filter matrices based on signals and/or feedback information received from one or more STAs. The beamforming matrices and/or matched filter matrices may be stored in the memory 114. The matched filter matrices may be sent to the transmitter 116 by the processor 112 or the matched filter matrices may be retrieved from the memory 114 by the transmitter 116. The transmitter 116 may utilize the beamforming matrices to generate signals to communicate the matched filter matrices to the STAs. The generated signals may be concurrently transmitted via the transmitting antennas 132a...132n.

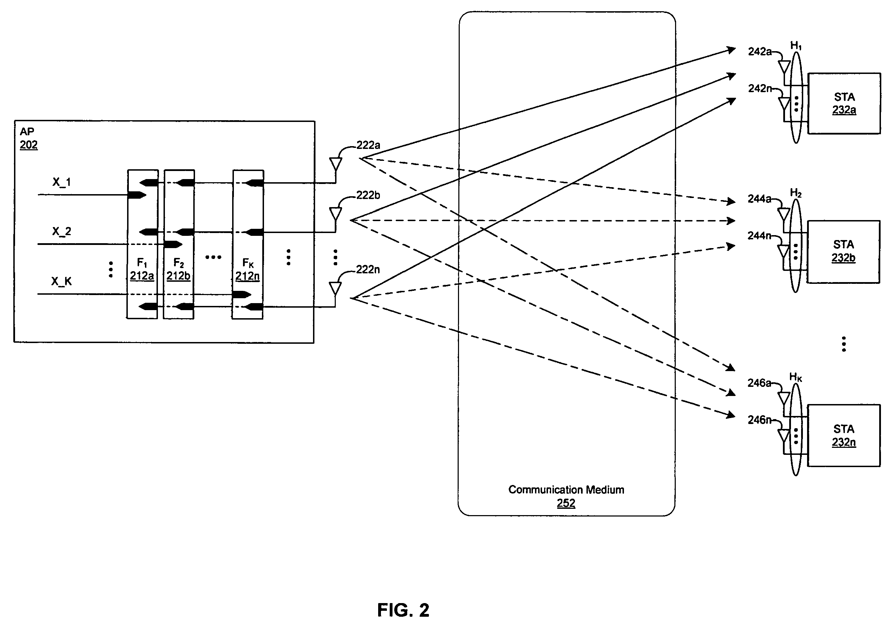

FIG. 2 is a block diagram of an exemplary multiple user MIMO system, which may be utilized in connection with an embodiment of the invention. Referring to FIG. 2, there is shown an AP 202 with a plurality of transmitting antennas 222a, 222b,..., 222n, a STA 232a with a plurality of antennas 242a...242n, a STA 232b with a plurality of antennas 244a...244n, a STA 232n with a plurality of antennas 246a...246n, and a communication medium 252. The number of STAs 232a, 232b,..., 232n may be represented by the quantity K. The antennas 242a...242n, 244a...244n and/or 246a...246n may be utilized for transmission and/or reception of signals at the STA 232a, 232b and 232n, respectively. The number of antennas at each of the STAs may be represented by the quantity M. However, in various embodiments of the invention, the number of antennas at any given STA may be independently determined. The AP 202 may comprise a plurality of beamformer blocks $F_1$ 212a, $F_2$ 212b and $F_K$ 212n. The number of transmitting antennas 222a, 222b,..., 222n may be represented by the quantity N.

In an exemplary embodiment of the invention, the AP 202 may concurrently transmit a plurality of K sets data streams, $X_1$, $X_2$,..., $X_K$. In an exemplary embodiment of the invention, each data stream set Xi may represent a plurality of L data streams. As shown in FIG. 2, each set data streams may be input to a corresponding one of the beamformer blocks. For example, as shown in FIG. 2, data stream set $X_1$ is coupled as an input to the beamformer block $F_1$ 212a, data stream set $X_2$ is coupled as an input to beamformer block $F_2$ 212b,..., data stream set $X_K$ is coupled as an input to beamformer block $F_K$ 212n. Each of the beamformer blocks 212a, 212b,..., 212n may be coupled to the plurality of transmitting antennas 222a, 222b,..., 222n. Each of the beamforming blocks 212a, 212b,..., 212n may utilize corresponding beamforming matrices, $F_1$, $F_2$,..., $F_K$, to generate a plurality of transmit chain signals, which are concurrently transmitted via the plurality of N transmitting antennas 222a, 222b,..., 222n. The transmitted signals may propagate across the communication medium 252. In an exemplary embodiment of the invention, the AP 202 may concurrently transmit signals generated from a plurality of $K \cdot L$ data streams. In various embodiments of the invention, $N \geq K \cdot L$.

In an exemplary embodiment of the invention, the concurrently transmitted signals from AP 202 may propagate across the communication medium 252 to be received via the plurality of M antennas 242a,..., 242n at the STA 232a. The communication channel from the AP 202 to the STA 232a may be characterized by a channel estimate matrix $H_1$, which is based on the signals concurrently transmitted by the plurality of N transmitting antennas and received via the plurality of M receiving antennas. The concurrently transmitted signals from the AP 202 may propagate across the communication medium 252 to be received via the plurality of M antennas 244a,..., 244n at the STA 232b. The communication channel from AP 202 to STA 232b may be characterized by a channel estimate matrix $H_2$. The concurrently transmitted signals from the AP 202 may propagate across the communication medium 252 to be received via the plurality of M antennas 246a,..., 246n at the STA 232n. The communication channel from the AP 202 to the STA 232n may be characterized by a channel estimate matrix $H_K$. In various embodiments of the invention, $M \geq L$.

In an exemplary embodiment of the invention, each of the STAs may utilize a corresponding matched filter matrix, $W_i$, to selectively receive a corresponding one of the K sets of data streams, $X_1$, $X_2$,..., $X_K$. For example, the STA 232a may utilize a matched filter matrix $W_1$, to selectively receive data stream set $X_1$, the STA 232b may utilize a matched filter matrix $W_2$, to selectively receive data stream set $X_2$, ..., and the STA 232n may utilize a matched filter matrix $W_K$, to selectively receive data stream set $X_K$.

Various embodiments of the invention comprise an iterative procedure for computing the beamforming matrices $F_1$, $F_2$,..., $F_K$, and matched filter matrices $W_1$, $W_2$,..., $W_K$, to maximize the aggregate capacity of the communication channels that are characterized by channel estimate matrices $H_1$, $H_2$,..., $H_K$.

In the exemplary embodiment of the invention, each of the STAs receives L spatial streams and utilizes a plurality of M receiving antennas, but various embodiments of the invention are not so limited. Various embodiments of the invention may also be practiced when the number of spatial streams in each spatial stream set and the number of receiving antennas at each STA are independently selected.

The communication system illustrated in FIG. 2 may be represented as shown in the following equation:

$$\begin{pmatrix} R_1 \\ \vdots \\ R_K \end{pmatrix} = \begin{pmatrix} H_1 \\ \vdots \\ H_K \end{pmatrix} \begin{pmatrix} F_1 & \cdots & F_K \end{pmatrix} \begin{pmatrix} X_1 \\ \vdots \\ X_K \end{pmatrix} + \begin{pmatrix} n_1 \\ \vdots \\ n_K \end{pmatrix} \qquad [1]$$

$$\begin{pmatrix} R_1 \\ \vdots \\ R_K \end{pmatrix} = \begin{pmatrix} H_1 F_1 & \cdots & H_1 F_K \\ \vdots & \ddots & \vdots \\ H_K F_1 & \cdots & H_K F_K \end{pmatrix} \begin{pmatrix} X_1 \\ \vdots \\ X_K \end{pmatrix} + \begin{pmatrix} n_1 \\ \vdots \\ n_K \end{pmatrix} \qquad [2]$$

where $R_1$...RK represent received signal vectors of signals received at each corresponding STA, $H_1$...$H_K$ represent channel estimate matrices associated with the communication channels from AP 202 to each corresponding STA, $F_1$...$F_K$ represent beamforming matrices associated with corresponding beamforming blocks 212a, 212b,..., 212n located at AP 202, $X_1$...$X_K$ represent data vectors for each of the plurality of spatial stream sets generated at the AP 202 and $n_1$...$n_K$ represent noise vectors for channel noise associated with the communication medium 252.

Referring to equation [1], and in an exemplary embodiment of the invention in which the AP 202 comprises N transmitting antennas and generates a plurality of K data vectors, each of which comprises L data streams. In an exemplary MU-MIMO communication system in which there is a plurality of K STAs, each of which utilizes a plurality of M antennas, each of the received signal vectors $R_i$ comprise M rows and 1 column, each of the channel estimate matrices Hi comprise M rows and N columns, each of the beamforming matrices $F_i$ comprise N rows and L columns, each of the data vectors $X_i$ comprise L rows and 1 column and each of the noise vectors $n_i$ comprise M rows and 1 column. Referring to equation [2], each of the off-diagonal matrix elements ($H_iF_j$, for i≠j) correspond to interference signals at the STAs. For example, for the STA 232a, the received signal vector $R_1$ may be represented as shown in the following equation:

$$R_1 = H_1F_1X_1 + H_1F_2X_2 + \cdots + H_1F_KX_K \qquad [3]$$

In equation [3], the signal component transmitted by AP 202 for reception by STA 232a is represented by the term $H_1F_1X_1$, while the remaining signal components in equation *[3]*, $H_1F_jX_j$ (where j≠1), represent interference signals that are received by STA 232a. The interference signals represented in equation [3] correspond to signals transmitted by the AP 202 for reception by other STAs, which are received by the STA 232a.

Each of the STAs may utilize matched filters to filter interference signals, such as those shown in equation [3]. In an exemplary embodiment of the invention, each STA may utilize a corresponding matched filter, which may be represented by corresponding matched filter matrices, $W_i$, as shown in the following equation:

$$\begin{pmatrix} W_1R_1 \\ \vdots \\ W_KR_K \end{pmatrix} = \begin{pmatrix} W_1H_1F_1 & \cdots & W_1H_1F_K \\ \vdots & \ddots & \vdots \\ W_KH_KF_1 & \cdots & W_KH_KF_K \end{pmatrix} \begin{pmatrix} X_1 \\ \vdots \\ X_K \end{pmatrix} + \begin{pmatrix} W_1n_1 \\ \vdots \\ W_Kn_K \end{pmatrix} \qquad [4]$$

Referring to equation [4], and in an exemplary embodiment of the invention in which each of the plurality of K STAs utilize a plurality of M antennas and receive a plurality if L data streams, each of the matched filter matrices $W_i$ comprise L rows and M columns. Accordingly, each of the filtered signal vectors $W_iR_i$ comprise L rows and 1 column. Each of the off-diagonal matrix elements *($W_iH_iF_j$, for i≠j)* correspond to filtered interference signals at the STAs. For example, for STA 232a, the filtered signal vector *$W_iR_i$* may be represented as shown in the following equation:

$$W_1R_1 = W_1H_1F_1X_1 + W_1H_1F_2X_2 + \cdots + W_1H_1F_KX_K \qquad [5]$$

In equation [5], the desired signal component is represented by the term $W_1H_1F_1X_1$, while the remaining signal components in equation [5], $W_1H_1F_jX_j$ (where j≠1), represent interference signals. The capacity, $C_1$, for the communication channel characterized by channel estimate matrix $H_1$, may be maximized when the matched filter matrix $W_1$ successfully cancels the interference signals components in equation [3]. Referring to equation [5], this condition may occur when:

$$W_1H_1F_2X_2 + \cdots + W_1H_1F_KX_K = 0 \qquad [6]$$

Various embodiments of the invention may comprise an iterative procedure for computing beamforming matrices, $F_1...F_K$, and matched filter matrices, $W_1...W_K$, such that the aggregate capacity, $C_{MU\text{-}MIMO}$, of the channels $C_i$ (for i=1, 2,..., K) is maximized. The aggregate capacity, $C_{MU\text{-}MIMO}$, may be represented as shown in the following equation:

$$C_{MU-MIMO} = \sum_{i=1}^{K} C_i \qquad [7]$$

where $C_i$ represents the capacity of the channel characterized by the channel estimate matrix $H_i$. Each capacity value $C_i$ may be represented as shown in the following equation:

$$C_i = \log_2\left(\det\left[I + F_i^H H_i^H \left(H_i\left(\sum_{k\neq i} F_k F_k^H\right) H_i^H + I\sigma^2\right)^{-1} H_i F_i\right]\right) \qquad [8]$$

where i represents a user index corresponding to one of the plurality of K STAs 232a, 232b,..., 232n, matrix $A^H$ represents a complex conjugate (or Hermitian transformed) version of matrix A, matrix $A^{-1}$ represents an inverse version of matrix A, matrix I represents an identity matrix and $\sigma^2$ represents noise power at each receiving antenna. In an exemplary embodiment of the invention, noise power corresponds to an additive white Gaussian noise (AWGN) channel.

Referring to equation [8], in various embodiments of the invention a unitary precoding matrix, $P_i$, may be utilized in conjunction with a corresponding beamforming matrix $F_i$ (for example, by replacing the matrix $F_i$ by the matrix product $F_iP_i$) without changing the corresponding capacity value $C_i$, as computed in equation [8]. In an exemplary embodiment of the invention, the spatial stream vector $X_i$ may be input to the precoding matrix $P_i$ with the output of the precoding matrix $P_i$ being input to the beamforming matrix $F_i$. In an exemplary embodiment of the invention, the precoding matrix $P_i$ may comprise $L_i$ rows and $L_i$ columns (where $L_i$ corresponds to the number of data streams that are associated with the $i^{th}$ user in the MU-MIMO communication system).

In various embodiments of the invention, an upper bound for the capacity value $C_{MU-MIMO}$ may be determined based on the capacity of a SU-MIMO channel as shown in the following equation:

$$C_{MU-MIMO} \le \log_2\left(\det\left[I + \frac{1}{\sigma^2} H^H H\right]\right) \qquad [9]$$

where H represents the channel estimate matrix for the SU-MIMO channel.

Referring to equation [8], the term:

$$\left(H_i\left(\sum_{k\neq i} F_k F_k^H\right) H_i^H + I\sigma^2\right) \qquad [10]$$

comprises an interference term, $H_i\left(\sum_{k\neq i} F_k F_k^H\right) H_i^H$ , and a noise term, $I\sigma^2$. Equation [10], therefore, represents an interference plus noise term in equation [8].

Based on equations [7] and [8], the aggregate capacity, $C_{MU-MIMO}$, may be represented as shown in the following equation:

$$C_{MU-MIMO} = \sum_{i=1}^{K} \log_2\left(\det\left[I + F_i^H H_i^H \left(H_i\left(\sum_{k\neq i} F_k F_k^H\right) H_i^H + I\sigma^2\right)^{-1} H_i F_i\right]\right) \qquad [11]$$

In various embodiments of the invention, and under high SNR conditions where:

$$F_i^H H_i^H H_i F_j = 0 \quad (j \neq i) \qquad [12]$$

the capacity value, $C_i$, may be maximized when the beamforming matrix $F_i$ is orthogonal as represented in the following equation:

$$F_i^H F_i = D_i \qquad\qquad [13]$$

where the matrix $D_i$ represents a diagonal matrix.

In various embodiments of the invention, a beamforming matrix $F_i$ may be computed, for example, based on a maximum signal-to-leakage-plus-noise ratio (SLNR) beamforming method or based on an equalized single user (SU) beamforming method). For the equalized SU beamforming method, for example, the beamforming matrices, F, may be computed as follows:

$$F = V\left(V^H V\right)^{-1} \qquad\qquad [14a]$$

where F comprises a plurality of beamforming matrices $F_i$ corresponding to the plurality of K users in the MU-MIMO system:

$$F = \begin{bmatrix} F_1 & F_2 & \cdots & F_K \end{bmatrix} \qquad\qquad [14b]$$

and V comprises a plurality of eigenvector matrices $V_i$ of $H_i$ corresponding to the plurality of K users in the MU-MIMO system:

$$V = \begin{bmatrix} V_1 & V_2 & \cdots & V_K \end{bmatrix} \qquad\qquad [14c]$$

In general, each of the beamforming matrices $F_i$ may not be orthogonal.

In various embodiments of the invention, an intermediate matrix $Y_i$ may be computed such that:

$$Y_i^H Y_i = F_i^H F_i \qquad\qquad [15a]$$

where the intermediate matrix $Y_i$ may be computed by utilizing Cholesky decomposition. A matrix $Z_i$ may be computed based on the computed intermediate matrix $Y_i$ :

$$Z_i = Y_i^{-1} \qquad\qquad [15b]$$

Based on the matrix $Z_i$, and the computed beamforming matrix $F_i$, an orthogonal beamforming matrix $\tilde{F}_i$, may be computed as shown in the following equation:

$$\tilde{F}_i = F_i Z_i \qquad\qquad [16]$$

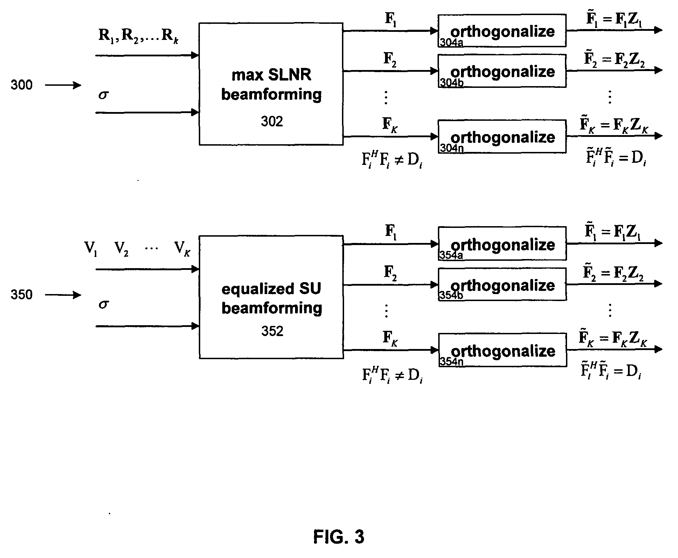

FIG. 3 is a flowchart that illustrates exemplary steps for orthogonalized beamforming in MU-MIMO communication systems, in accordance with an embodiment of the invention. Referring to FIG. 3, label 300 illustrates exemplary steps for orthogonalized beamforming when the beamforming matrices $F_i$ are computed utilizing a maximum SLNR beamforming method while label 350 illustrates exemplary steps for orthogonalized beamforming when the beamforming matrices $F_i$ are computed utilizing an equalized SU beamforming method.

Referring to label 300, given a noise variance parameter, $\sigma$, and a plurality of channel correlation matrices $R_1$, $R_2,...,R_k$, where:

$$R_i = H_i^H H_i \qquad [17]$$

and where $H_i$ represents the channel estimate matrix for the $i^{th}$ user in the MU-MIMO system. The maximum SLNR beamforming block 302 may compute a corresponding plurality of beamforming matrices $F_i$ using maximum SLNR beamforming. In general, each of the computed beamforming matrices $F_i$, is not orthogonal, as represented in the following equation:

$$F_i^H F_i \neq D_i \qquad [18]$$

where the matrix $D_i$ represents a diagonal matrix.

In various embodiments of the invention, for each computed beamforming matrix, $F_i$, a corresponding orthogonal beamforming matrix $\tilde{F}_i$ may be computed as shown in equations [13]-[16]. Referring to label 300, equations [13]-[16] may be represented by each of the orthogonalized blocks 304a, 304b,..., 304n.

Referring to label 350, there is shown a plurality of eigenvector matrices $V_1$, $V_2$,..., $V_k$, where each matrix $V_i$, comprising N rows (where N represents the number of transmitting antennas at the AP 202 in the MU-MIMO communication system, for example) and $L_i$ columns, may be computed based on a singular value decomposition (SVD) of the corresponding channel estimate matrix $H_i$ (for example, each matrix $V_i$ may comprise right singular vectors corresponding to the $L_i$ largest singular values in the singular value decomposition). Given an optional noise variance parameter, $\sigma$, and the plurality of matrices $V_1$, $V_2$,..., $V_k$, the equalized SU beamforming block 352 may compute a corresponding plurality of beamforming matrices $F_i$ using equalized SU beamforming. In general, each of the computed beamforming matrices $F_i$ is not orthogonal, as represented in equation [18]. In various embodiments of the invention, for each computed beamforming matrix, $F_i$, a corresponding orthogonal beamforming matrix $\tilde{F}_i$ may be computed as shown in equations [13]-[16]. Referring to label 350, equations [13]-[16] may be represented by each of the orthgonalize blocks 354a, 354b,..., 354n.

In various embodiments of the invention, the data streams associated with each $i^{th}$ user may be precoded by utilizing a corresponding unitary precoding matrix $P_i$. The precoded data streams may then be input to a beamforming block that corresponds to the orthogonal beamforming matrix $\tilde{F}_i$. In an exemplary embodiment of the invention, each precoding matrix $P_i$ may comprise $L_i$ rows and $L_i$ columns. In an exemplary embodiment of the invention, where precoding is utilized at AP 202 in the exemplary MU-MIMO communication system presented in FIG. 2, an orthogonal beamforming matrix with precoding, $F_i$, may be computed based on the orthogonal beamforming matrix $F_i$ and the corresponding precoding matrix $P_i$ as shown in the following equation:

$$\tilde{\tilde{F}}_i = \tilde{F}_i P_i \qquad [19]$$

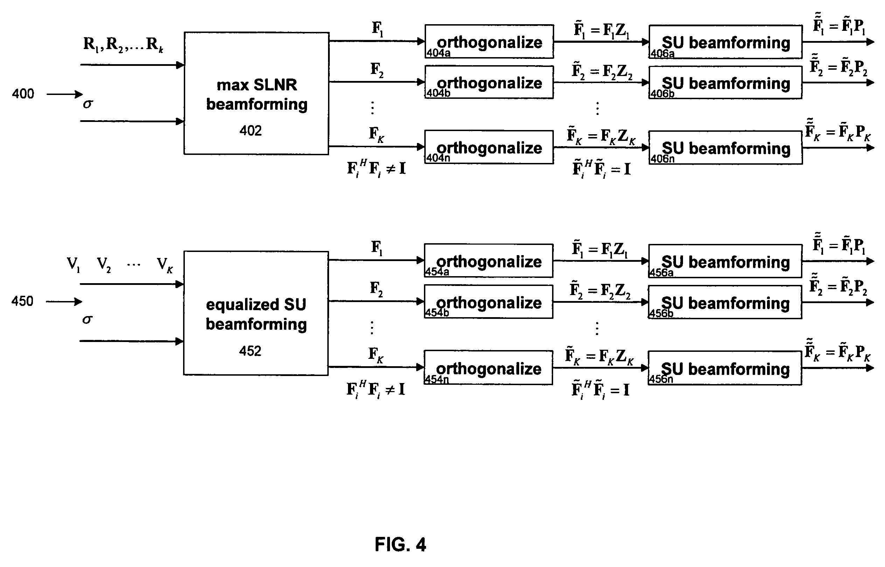

FIG. 4 is a flowchart that illustrates exemplary steps for orthogonalized beamforming with precoding in MU-MIMO communication systems, in accordance with an embodiment of the invention. Referring to FIG. 4, label 400 illustrates exemplary steps for orthogonalized beamforming with precoding when the beamforming matrices $F_i$ are computed utilizing a maximum SLNR beamforming method while label 450 illustrates exemplary steps for orthogonalized beamforming with precoding when the beamforming matrices $F_i$ are computed utilizing an equalized SU beamforming method.

Referring to label 400, given a noise variance parameter, $\sigma$, and a plurality of matrices $R_1$, $R_2$,..., $R_k$, a corresponding plurality of beamforming matrices $F_i$ may be computed using maximum SLNR beamforming. In general, each of the computed beamforming matrices $F_i$, is not orthogonal. In various embodiments of the invention, for each computed beamforming matrix, $F_i$, a corresponding orthogonal beamforming matrix $F_i$ may be computed as shown in equations [13]-[16]. Referring to label 400, equations [13]-[16] may be represented by each of the orthgonalize blocks 404a, 404b,..., 404n.

For each computed orthogonal beamforming matrix $F_i$, a corresponding orthogonal beamforming matrix with precoding $F_i$ may be computed as shown in equation [19]. Referring to label 400, equation [19] may be represented by each of the SU beamforming blocks 406a, 406b, ..., 406n.

Referring to label 450, given an optional noise variance parameter, $\sigma$, and the plurality of matrices $V_1$, $V_2$,..., $V_k$ a corresponding plurality of beamforming matrices $F_i$ may be computed using equalized SU beamforming. In general, each of the computed beamforming matrices $F_i$, is not orthogonal. In various embodiments of the invention, for each computed beamforming matrix, $F_i$, a corresponding orthogonal beamforming matrix $\tilde{F}_i$ may be computed as shown in equations [13]-[16] . Referring to label 450, equations [13]-[16] may be represented by each of the orthgonalize blocks 454a, 454b,...,454n. For each computed orthogonal beamforming matrix $\tilde{F}_i$, a corresponding orthogonal beamforming matrix with precoding $F_i$ may be computed as shown in equation [19]. Referring to label 450, equation [19] may be represented by each of the SU beamforming blocks 456a, 456b, ..., 456n.

In various embodiments of the invention, for a receiver for the $i^{th}$ user in the MU-MIMO system where the receiver, for example the STA 232a, utilizes linear equalization, the precoding matrix $P_i$ may be computed by utilizing SVD as shown in the following equation:

$$U_i S_i V_i^H = H_i \tilde{F}_i \qquad\qquad [20]$$

where $S_i$ represents a diagonal singular value matrix, $U_i$ represents a matrix of left singular vectors and $V_i$ represents a matrix of right singular vectors. In various embodiments of the invention, matrices $U_i$ and $V_i$ are unitary matrices. Based on equation [20], the precoding matrix $F_i$ may be computed as shown in the following equation:

$$P_i = V_i \begin{bmatrix} I_{L_i} \\ 0 \end{bmatrix} \qquad\qquad [21]$$

where $I_{Li}$ represents an identity matrix, which comprises $L_i$ rows and $L_i$ columns.

In various embodiments of the invention, for a receiver for the $i^{th}$ user in the MU-MIMO system, where the receiver, for example the STA 232a, utilizes maximum likelihood (ML) detection, each precoding matrix $P_i$ may be computed to optimize the post-ML detection performance for the receiver. An exemplary method for improving performance for an ML receiver is disclosed in United States Patent Application Serial No. 12/246,206, filed on October 6, 2008, which is hereby incorporated herein by reference in its entirety.

Another embodiment of the invention may provide a computer readable medium, having stored thereon, a computer program having at least one code section executable by a computer, thereby causing the computer to perform the steps as described herein for orthogonalized beamforming in multiple user multiple input multiple output (MU-MIMO) communication systems.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1.   A method for processing signals, the method comprising:

performing by one or more processors and/or circuits:

computing a plurality of beamforming matrices in a multiple user multiple input multiple output system based on a plurality of channel estimate matrices, channel correlation matrices and/or eigenvector matrices; computing a plurality of orthogonalizing matrices based on said plurality of beamforming matrices; and determining a plurality of orthogonal beamforming matrices based on said plurality of beamforming matrices and said plurality of orthogonalizing matrices.

2. The method according to claim 1, comprising generating a plurality of intermediate matrices based on said plurality of beamforming matrices.

3. The method according to claim 2, comprising selecting one of said plurality of intermediate matrices and a corresponding selected one of said plurality of beamforming matrices.

4. The method according to claim 3, wherein a matrix product of said selected one of said plurality of intermediate matrices and a Hermitian transformed version of said selected one of said plurality of intermediate matrices is equal to a matrix product of said corresponding selected one of said plurality of beamforming matrices and a Hermitian transformed version of said corresponding selected one of said plurality of beamforming matrices.

5. The method according to claim 4, comprising generating said selected one of said plurality of intermediate matrices based on Cholesky decomposition.

6. The method according to claim 5, wherein a selected one of said plurality of orthogonalizing matrices is equal to a matrix inverted version of said selected one of said plurality of intermediate matrices.

7. The method according to claim 6, comprising computing one of said plurality of orthogonal beamforming matrices based on said selected one of said plurality of orthogonalizing matrices and said corresponding selected one of said plurality of beamforming matrices.

8. The method according to claim 1, comprising computing a plurality of precoding matrices for said multiple user multiple input multiple output system.

9. The method according to claim 8, wherein each of said plurality of precoding matrices corresponds to at least one of a plurality of users in said multiple user multiple input multiple output system.

10. The method according to claim 8, comprising generating a plurality of orthogonal precoding beamforming matrices based on said plurality of precoding matrices and said plurality of orthogonal beamforming matrices.

11. A system for processing signals, the system comprising:

one or more circuits that enable computation of a plurality of beamforming matrices in a multiple user multiple input multiple output system based on a plurality of channel estimate matrices, channel correlation matrices and/or eigenvector matrices; said one or more circuits enable computation of a plurality of orthogonalizing matrices based on said plurality of beamforming matrices; and said one or more circuits enable determination of a plurality of orthogonal beamforming matrices based on said plurality of beamforming matrices and said plurality of orthogonalizing matrices.

12. The system according to claim 11, wherein said one or more circuits enable generation of a plurality of intermediate matrices based on said plurality of beamforming matrices.

13. The system according to claim 12, wherein said one or more circuits enable selection of one of said plurality of intermediate matrices and a corresponding selected one of said plurality of beamforming matrices.

14. The system according to claim 13, wherein a matrix product of said selected one of said plurality of intermediate matrices and a Hermitian transformed version of said selected one of said plurality of intermediate matrices is equal to a matrix product of said corresponding selected one of said plurality of beamforming matrices and a Hermitian transformed version of said corresponding selected one of said plurality of beamforming matrices.

15. The system according to claim 14, wherein said one or more circuits enable generation of said selected one of said plurality of intermediate matrices based on Cholesky decomposition.

**FIG. 1**

**FIG. 2**

EP 2 355 370 A1

$R_1, R_2, \ldots R_k$

$\sigma$

300 →

**max SLNR beamforming**

302

$F_1$

$F_2$

$F_K$

$F_i^H F_i \neq D_i$

orthogonalize
304a

orthogonalize
304b

orthogonalize
304n

$\tilde{F}_1 = F_1 Z_1$

$\tilde{F}_2 = F_2 Z_2$

$\tilde{F}_K = F_K Z_K$

$\tilde{F}_i^H \tilde{F}_i = D_i$

$V_1 \quad V_2 \quad \cdots \quad V_K$

$\sigma$

350 →

**equalized SU beamforming**

352

$F_1$

$F_2$

$F_K$

$F_i^H F_i \neq D_i$

orthogonalize
354a

orthogonalize
354b

orthogonalize
354n

$\tilde{F}_1 = F_1 Z_1$

$\tilde{F}_2 = F_2 Z_2$

$\tilde{F}_K = F_K Z_K$

$\tilde{F}_i^H \tilde{F}_i = D_i$

**FIG. 3**

EP 2 355 370 A1

**FIG. 4**

| Europäisches Patentamt European Patent Office Office européen des brevets | **EUROPEAN SEARCH REPORT** | Application Number EP 11 00 0159 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/322614 A1 (NA YANXIN [US] ET AL) 31 December 2009 (2009-12-31) * abstract * * claims 1-20 * * paragraph [0026] - paragraph [0029]; figures 1-3 * ----- | 1-15 | INV. H04B7/06 H04B7/04 |
| X | WO 2009/023700 A2 (INTERDIGITAL TECH CORP [US]; PAN KYLE JUNG-LIN [US]; BALA ERDEM [US];) 19 February 2009 (2009-02-19) * abstract * * claims 1,4 * ----- | 1-15 | |
| A | EP 1 780 925 A2 (SAMSUNG ELECTRONICS CO LTD [KR]) 2 May 2007 (2007-05-02) * claims 1-3; figure 1 * ----- | 1-15 | |
| A | CN 101 529 782 A (MARVELL WORLD TRADE LTD [BB]) 9 September 2009 (2009-09-09) * claim 24 * ----- | 1-15 | |
| A | US 2008/032746 A1 (OLESEN ROBERT LIND [US] ET AL) 7 February 2008 (2008-02-07) * abstract * * claims 1-9 * ----- -/-- | 1-15 | TECHNICAL FIELDS SEARCHED (IPC) H04B |

The present search report has been drawn up for all claims

| Place of search | Date of completion of the search | Examiner |
|---|---|---|
| Munich | 17 May 2011 | Martínez Cebollada |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 00 0159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | INTERDIGITAL COMMUNICATIONS ET AL: "MU-MIMO Codebook Subset Selection and Signaling Considerations for E-UTRA", 3GPP DRAFT; R1-073353, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20070815, 15 August 2007 (2007-08-15), XP050106983, [retrieved on 2007-08-15] * Section 3 * ----- | 1-15 | |
| A | HUANG K ET AL: "Orthogonal Beamforming for SDMA Downlink with Limited Feedback", 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15 April 2007 (2007-04-15), pages III-97, XP031463415, ISBN: 978-1-4244-0727-9 * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 17 May 2011 | Martínez Cebollada |

EPO FORM 1503 03.82 (P04C01)

**ANNEX TO THE EUROPEAN SEARCH REPORT
ON EUROPEAN PATENT APPLICATION NO.**

EP 11 00 0159

This annex lists the patent family members relating to the patent documents cited in  the above-mentioned European search report.
The members are as contained in the European Patent Office EDP file on
The European Patent Office is in no way liable for these particulars which are merely given for the purpose of information.

17-05-2011

| Patent document cited in search report | | Publication date | Patent family member(s) | | Publication date |
|---|---|---|---|---|---|
| US 2009322614 | A1 | 31-12-2009 | NONE | | |
| WO 2009023700 | A2 | 19-02-2009 | AR | 067936 A1 | 28-10-2009 |
|  |  |  | US | 2009046801 A1 | 19-02-2009 |
| EP 1780925 | A2 | 02-05-2007 | CN | 101300749 A | 05-11-2008 |
|  |  |  | JP | 2009514323 T | 02-04-2009 |
|  |  |  | WO | 2007052941 A1 | 10-05-2007 |
|  |  |  | KR | 20070046680 A | 03-05-2007 |
|  |  |  | RU | 2369966 C1 | 10-10-2009 |
|  |  |  | US | 2007104283 A1 | 10-05-2007 |
| CN 101529782 | A | 09-09-2009 | NONE | | |
| US 2008032746 | A1 | 07-02-2008 | AR | 062228 A1 | 22-10-2008 |
|  |  |  | AU | 2007284906 A1 | 21-02-2008 |
|  |  |  | CA | 2660826 A1 | 21-02-2008 |
|  |  |  | CN | 101502020 A | 05-08-2009 |
|  |  |  | EP | 2050205 A2 | 22-04-2009 |
|  |  |  | JP | 2010500814 T | 07-01-2010 |
|  |  |  | KR | 20090032139 A | 31-03-2009 |
|  |  |  | KR | 20090032144 A | 31-03-2009 |
|  |  |  | RU | 2009108332 A | 20-09-2010 |
|  |  |  | WO | 2008021008 A2 | 21-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61296633 A

- US 12246206 B